# DEMANDE DE BREVET EUROPEEN

(11) **EP 1 048 525 A1**
(43) Date de publication de la demande: **02.11.2000**
(21) Numéro de dépôt: 00401172.2
(22) Date de dépôt: 27.04.2000
(51) Int. Cl.: B60R 7/06

(54) **Réceptacle, notamment pour planche de bord véhicule automobile**

(30) Priorité: 28.04.1999 FR 9905390
(71) Demandeur: ECIA INDUSTRIE, 92100 Boulogne (FR)
(72) Inventeur: Beaume, Hugues, 25200 Montbélliard (FR); Vannelli, Frédéric, 25490 Fesches le Chatel (FR)
(74) Mandataire: Jacobson, Claude

(57) **Abrégé**

Ce réceptacle comprend un corps (14), muni d'une ouverture d'accès obturable par deux volets (18, 20), déplaçables chacun entre des positions de dégagement et d'obturation de l'ouverture d'accès. Ce réceptacle comprend de plus des moyens (26) d'asservissement mutuel des positions des volets (18, 20), de manière que ces volets (18, 20) soient déplacés simultanément vers leur position de dégagement ou d'obturation de l'ouverture d'accès. De préférence, les moyens d'asservissement comprennent deux secteurs (28, 30), éventuellement dentés, solidaires des deux volets (18,30), centrés sur des axes imaginaires (T1, T2) de rotation des volets.

## Description

La présente invention concerne un réceptacle, notamment pour planche de bord de véhicule automobile.

On connaît déjà dans l'état de la technique un réceptacle du type comprenant un corps muni d'une ouverture d'accès obturable par deux volets déplaçables chacun entre des positions de dégagement et d'obturation de l'ouverture d'accès.

L'invention a pour but de proposer un réceptacle du type précité, formant notamment une boîte à gants ou un vide-poches pour planche de bord de véhicule automobile, muni de moyens d'obturation simples permettant de dégager une vaste ouverture d'accès au réceptacle lorsqu'ils sont ouverts.

A cet effet, l'invention a pour objet un réceptacle du type précité, caractérisé en ce qu'il comprend des moyens d'asservissement mutuel des positions des volets, de manière que ces volets soient déplacés simultanément vers leur position de dégagement ou d'obturation de l'ouverture d'accès.

Suivant d'autres caractéristiques de ce réceptacle :
- les volets sont déplaçables entre leurs positions de dégagement et d'obturation suivant des trajectoires courbes ;
- les volets sont montés déplaçables autour d'axes fixes imaginaires, sensiblement parallèles entre eux, de façon à décrire des trajectoires en arc de cercle sensiblement coplanaires, les volets étant décalés radialement par rapport à ces axes imaginaires ;
- les moyens d'asservissement comprennent deux secteurs solidaires respectivement des deux volets et centrés sur les axes imaginaires, ces secteurs étant délimités par des surfaces d'assujettissement mutuel coopérant entre elles par roulement ;
- les surfaces d'assujettissement sont formées par des dentures complémentaires engrenant l'une avec l'autre ;
- au moins un des secteurs coopère par frottement avec un organe de freinage du déplacement des volets ;
- les axes imaginaires sont matérialisés par des tourillons, portés par le corps du réceptacle, auxquels sont reliés les volets par l'intermédiaire de bras sensiblement radiaux ;
- les volets sont guidés en rotation par des moyens à glissière curviligne ;
- les volets sont rappelés élastiquement en position de dégagement de l'ouverture d'accès.

L'invention a également pour objet une planche de bord de véhicule automobile, caractérisée en ce qu'elle comprend un réceptacle tel que défini ci-dessus.

L'invention sera mieux comprise à la lecture de la description qui va suivre, donnée uniquement à titre d'exemple et faite en se référant aux dessins, dans lesquels :
- les figures 1 et 2 sont des vues en perspective, de trois-quarts avant, d'un réceptacle selon l'invention, les volets étant respectivement en position d'obturation (figure 1) et en position de dégagement de l'ouverture d'accès (figure 2) ;
- les figures 3 et 4 sont des vues de côté du réceptacle représenté respectivement sur les figures 1 et 2.

On a représenté sur les figures un réceptacle 10 selon l'invention qui, dans l'exemple illustré, est agencé dans une planche de bord 12 de véhicule automobile. Ce réceptacle 10 forme un vide-poches ou une boîte à gants.

Le réceptacle 10 comporte un corps 14, muni d'une ouverture d'accès 16 obturable par deux volets supérieur 18 et inférieur 20. Chaque volet 18, 20 est déplaçable suivant une trajectoire courbe entre des positions de dégagement et d'obturation de l'ouverture d'accès 16.

De préférence, les volets 18, 20 ont un profil courbe épousant sensiblement leur trajectoire. Dans leur position d'obturation, les volets 18, 20 présentent chacun deux bords complémentaires jointifs 18J, 20J.

Dans l'exemple illustré, les volets 18, 20 sont déplaçables autour d'axes fixes imaginaires T1, T2 sensiblement parallèles, de façon à décrire des trajectoires en arc de cercle sensiblement coplanaires et parallèles à un côté du réceptacle. Les volets 18, 20 sont décalés radialement par rapport à ces axes imaginaires T1, T2. Ces derniers sont matérialisés par des tourillons 22, 24, portés par le corps 14, auxquels sont reliés les volets 18, 20 par des moyens qui seront décrits ultérieurement.

Le réceptacle 10 comprend des moyens 26 d'asservissement mutuel des positions des volets 18, 20, de manière que ces volets 18, 20 soient déplacés simultanément vers leur position de dégagement ou d'obturation de l'ouverture d'accès 16.

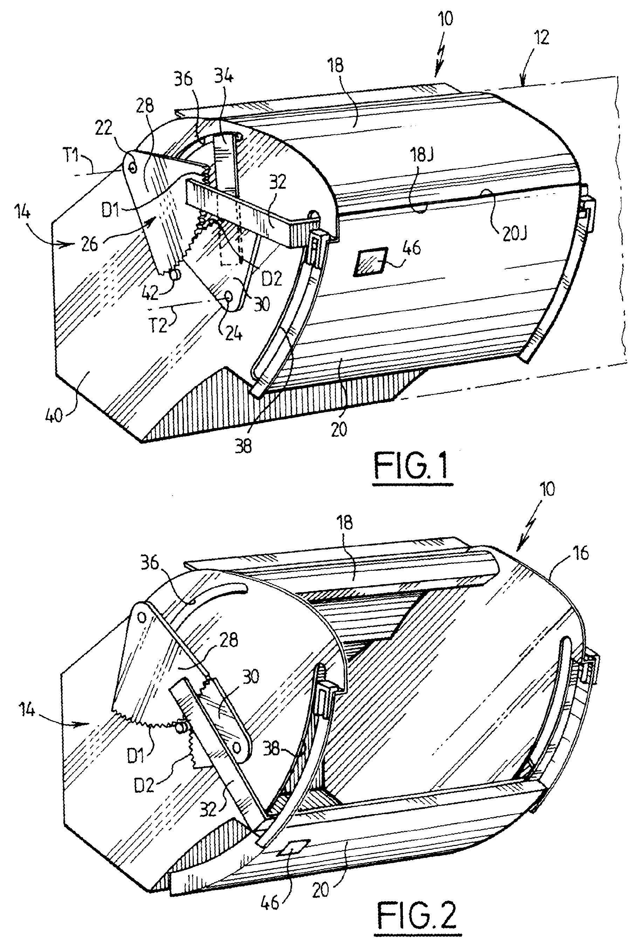

Dans l'exemple décrit, les moyens d'asservissement 26 sont agencés en double sur deux côtés opposés du réceptacle 10. En variante, ces moyens d'asservissement pourraient n'être agencés que sur un côté du réceptacle 10. Dans ce qui suit, on décrira les organes des moyens d'asservissement 26 agencés sur le côté gauche du réceptacle, en considérant les figures 1 et 2, ceux agencés sur le côté droit de ce réceptacle étant identiques.

Les moyens d'asservissement 26 comprennent deux secteurs 28, 30 centrés sur les axes imaginaires T1, T2 et reliés aux tourillons 22, 24. Ces secteurs 28, 30, solidaires des volets 18, 20, sont reliés à ces volets par des bras 32, 34 sensiblement radiaux.

Les bras 32, 34 sont muni chacun d'une extrémité coudée de liaison avec les volets 18, 20 montée déplaçable à travers une lumière curviligne correspondante 36, 38 ménagée dans une paroi latérale 40 du réceptacle.

Les volets 18, 20 sont donc reliés aux tourillons 22, 24 par l'intermédiaire des bras 32, 34 et des secteurs 28, 30.

Le cas échéant, les lumières 36, 38 peuvent former des glissières curvilignes coopérant avec les bras de liaison 32, 34, de façon à guider en rotation les volets 18, 20.

Lorsqu'il existe de tels moyens de guidage à glissière, il n'est pas nécessaire de matérialiser les axes de rotation imaginaires T1, T2 par des tourillons 22, 24, ces derniers pouvant donc être supprimés.

Les secteurs 28, 30 sont délimités par des surfaces d'assujettissement mutuel coopérant entre elles par roulement. Dans l'exemple illustré sur les figures, ces surfaces d'assujettissement sont formées par des dentures complémentaires curvilignes D1, D2 engrenant l'une avec l'autre.

En variante, les dentures D1, D2 peuvent être remplacées par des surfaces de contact curvilignes recouvertes d'un revêtement antidérapant.

De préférence, au moins un des secteurs, par exemple le secteur 28, coopère par frottement avec un organe de freinage classique, par exemple un pion 42 en caoutchouc. Ce pion 42 permet de freiner le déplacement des volets 18, 20, de façon à rendre leur manoeuvre plus agréable.

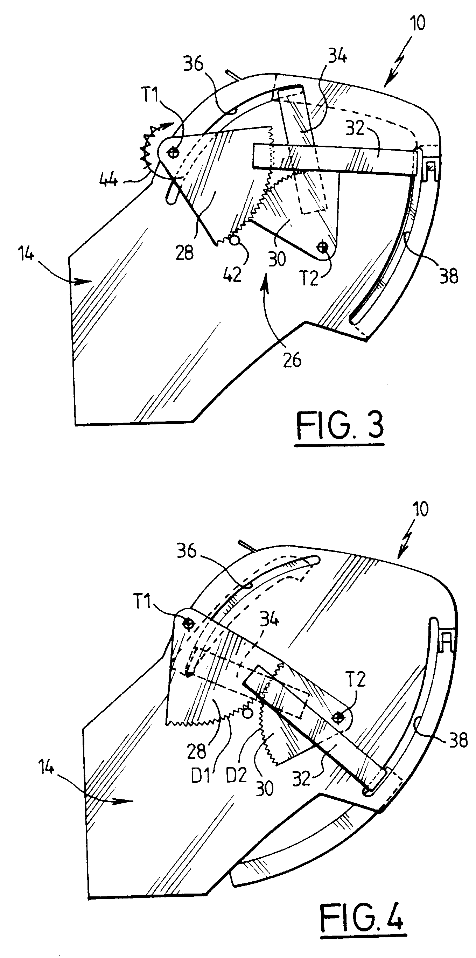

De préférence également, les volets sont rappelés élastiquement en position de dégagement, par exemple à l'aide d'un ressort 44 à effet angulaire, schématisé sur la figure 3, accroché sur le secteur 28 autour du tourillon 22.

Les volets 18, 20 sont maintenus dans leur position d'obturation à l'aide de moyens de verrouillage classiques, non représentés sur les figures, s'opposant à la force de rappel du ressort 44. Ces moyens de verrouillage sont commandés, par exemple, par un bouton 46 porté par le volet inférieur 20.

Le réceptacle 10 selon l'invention fonctionne de façon très simple.

On considère initialement le réceptacle 10 dans sa configuration telle que représentée sur les figures 1 et 3 dans laquelle les volets 18, 20 sont dans leur position d'obturation de l'ouverture d'accès 16.

Pour accéder à l'intérieur du réceptacle 10, c'est-à-dire à l'intérieur du corps 14, l'utilisateur appuie sur le bouton 46, de manière à déverrouiller les volets 18, 20. Ces derniers se déplacent alors simultanément vers leur position de dégagement de l'ouverture d'accès sous l'effet de la force de rappel du ressort 44 et des moyens d'asservissement 26.

Les volets 18, 20 atteignent ensuite leur position de dégagement de l'ouverture d'accès 16, telle qu'illustrée sur les figures 2 et 4, cette position étant définie par exemple par une extrémité d'une lumière 36, 38 coopérant par butée avec un bras 32, 34 correspondant.

Pour obturer à nouveau l'ouverture d'accès 16, l'utilisateur saisit un des volets, par exemple le volet inférieure 20, de façon à ramener simultanément les deux volets vers leur position d'obturation de l'ouverture 16, en s'opposant à la force de rappel du ressort 44.

## Revendications

1. Réceptacle du type comprenant un corps (14) muni d'une ouverture d'accès (16) obturable par deux volets (18, 20) déplaçables chacun entre des positions de dégagement et d'obturation de l'ouverture d'accès (16), **caractérisé en ce qu'**il comprend des moyens (26) d'asservissement mutuel des positions des volets (18, 20), de manière que ces volets (18, 20) soient déplacés simultanément vers leur position de dégagement ou d'obturation de l'ouverture d'accès (16).

2. Réceptacle selon la revendication 1, **caractérisé en ce que** les volets (18, 20) sont déplaçables entre leurs positions de dégagement et d'obturation suivant des trajectoires courbes.

3. Réceptacle selon la revendication 2, **caractérisé en ce que** les volets (18, 20) sont montés déplaçables autour d'axes fixes imaginaires (T1, T2), sensiblement parallèles entre eux, de façon à décrire des trajectoires en arc de cercle sensiblement coplanaires, les volets (18, 20) étant décalés radialement par rapport à ces axes imaginaires.

4. Réceptacle selon la revendication 3, **caractérisé en ce que** les moyens d'asservissement (26) comprennent deux secteurs (28, 30) solidaires respectivement des deux volets (18, 20) et centrés sur les axes imaginaires (T1, T2), ces secteurs (28,30) étant délimités par des surfaces d'assujettissement mutuel (D1, D2) coopérant entre elles par roulement.

5. Réceptacle selon la revendication 4, **caractérisé en ce que** les surfaces d'assujettissement sont formées par des dentures complémentaires (D1, D2) engrenant l'une avec l'autre.

6. Réceptacle selon la revendication 4 ou 5, **caractérisé en ce qu'**au moins un des secteurs (28) coopère par frottement avec un organe (42) de freinage du déplacement des volets.

7. Réceptacle selon l'une quelconque des revendications 3 à 6, **caractérisé en ce que** les axes imaginaires (T1, T2) sont matérialisés par des tourillons (22, 24), portés par le corps (14) du réceptacle, auxquels sont reliés les volets par l'intermédiaire de bras (32, 34) sensiblement radiaux.

8. Réceptacle selon l'une quelconque des revendications 3 à 7, **caractérisé en ce que** les volets (18, 20) sont guidés en rotation par des moyens à glissière curviligne.

9. Réceptacle selon l'une quelconque des revendications précédentes, **caractérisé en ce que** les volets (18, 20) sont rappelés élastiquement en position de dégagement de l'ouverture d'accès.

10. Planche de bord de véhicule automobile, **caractérisée en ce qu'**elle comprend un réceptacle selon l'une quelconque des revendications précédentes.
